# EUROPEAN PATENT SPECIFICATION

(11) **EP 3 307 840 B1**
(45) Date of publication and mention of the grant of the patent: **05.08.2020**
(21) Application number: 16734503.2
(22) Date of filing: 13.06.2016
(51) Int. Cl.: C09D 171/00, C09D 163/00, C08G 65/24, C08G 65/48, C08G 59/08, C08G 59/06, C08G 59/62

(54) **FOOD OR BEVERAGE PACKAGES AND METHODS OF COATING SUCH PACKAGES**
NAHRUNGSMITTEL- ODER GETRÄNKEVERPACKUNGEN UND VERFAHREN ZUM BESCHICHTEN SOLCHER VERPACKUNGEN
EMBALLAGES POUR ALIMENTS OU BOISSONS ET PROCÉDÉS D'ENDUCTION DE CES EMBALLAGES

(30) Priority: 12.06.2015 US 201562174782 P
(43) Date of publication of application: 18.04.2018
(73) Proprietor: PPG Industries Ohio, Inc., Cleveland, OH 44111 (US)
(72) Inventor: MOUSSA, Youssef, Loveland, Ohio 45140 (US); DEAN, Edward, Cincinnati, Ohio 45230 (US)
(74) Representative: f & e patent
(86) International application number: PCT/US2016/037170
(87) International publication number: WO 2016/201407

(56) References cited:
- EP-A1- 1 354 904
- WO-A1-2013/119686
- WO-A1-2014/025410
- WO-A1-2014/025411
- WO-A2-2012/109278
- US-A- 4 638 038
- US-A- 5 387 625

## Description

### FIELD OF THE INVENTION

The present invention relates to coated packages and methods of coating such packages with a coating composition containing a polyhydroxy ether prepared with substituted polyhydric phenols. The coating compositions are substantially free of bisphenol A and reaction products thereof including bisphenol A itself and bisphenol A diglycidyl ethers ("BADGE").

### BACKGROUND OF THE INVENTION

A wide variety of coatings have been used to coat the surfaces of food and beverage containers. For example, metal cans are sometimes coated using coil coating or sheet coating operations, that is, a coil or sheet of steel or aluminum is coated with a suitable composition and cured. The coated substrate is then formed into the can body or can end. Alternatively, the coating composition may be applied, for example, by spraying, to the formed can and then cured. Coatings for food and beverage containers should preferably be capable of high speed application to the substrate and provide the necessary properties when cured to perform in a demanding end use environment. For example, the coating should be safe for food contact and have excellent adhesion to the substrate.

Many of the coating compositions for food and beverage containers are based on polyhydroxy ether resins that are based on polyglycidyl ethers of bisphenol A. Bisphenol A in container coatings either as bisphenol A itself (BPA) or reaction products thereof, such as diglycidyl ethers of bisphenol A (BADGE), epoxy novolak resins and polyols prepared with bisphenol A are problematic. Although the balance of scientific evidence available to date indicates that small trace amounts of BPA or BADGE that might be released from existing coatings does not pose health risks to humans, these compounds are nevertheless perceived by some as being an endocrine-disrupting compound that is eluted from the food or beverage container and absorbed into the food or beverage within the container. Consequently, there is a strong desire to eliminate these compounds from coatings for food and beverage containers. Accordingly, what are desired are container coating compositions for food and beverage containers that do not contain extractable quantities of BPA, BADGE or other derivatives of BPA and yet have commercially acceptable properties.

WO 2012/109278 relates to a polyether polymer for use in coating compositions, containers comprising said polymer and and methods making such containers.

It is known to prepare polyhydroxy ethers from biphenolic compounds in which the phenylene ring is substituted with one or more alkyl groups. Examples of such biphenolic compounds are: 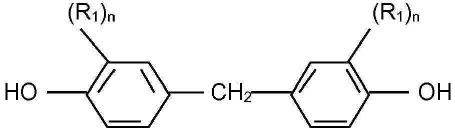 where R₁ is C₁ to C₄ alkyl and n = 1 to 2.

Diglycidyl ethers of these biphenolic compounds are first prepared and then are chain extended or advanced with another phenolic compound, such as resorcinol or hydroquinone. However, the alkyl substitution in the phenylene ring apparently exerts steric hindrance and deactivates the reactivity of the hydroxyl groups in the biphenolic compound. Consequently, these biphenolic compounds are not reactive with epoxy groups and cannot be used for the chain extension or advancement reaction. Such a reaction is typically done with a dihydroxy phenolic compound that is not sterically hindered, such as resorcinol or hydroquinone. Consequently, the percentage by weight of the biphenolic compound that can be included in the polyhydroxy ether is limited, which may result in poor coating properties.

### SUMMARY OF THE INVENTION

The present invention relates to a package or a portion thereof having an interior food-contacting surface and a coating composition being substantially free of bisphenol A and reaction products thereof applied to the interior surface; wherein the coating composition comprises a polyhydroxy ether polymer and a curing agent for the polyhydroxy ether and in which the polyhydroxy ether is prepared from reacting epichlorohydrin with a polyhydric phenol having the following structure (I): 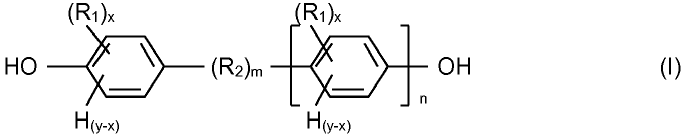 where R₁ is independently an organic group having a molecular weight of at least 15 Daltons or R₁ can optionally join together with another R₁ to form a fused aromatic ring that is similarly substituted with the R₁ organic group; y = 4, x = 1 to 2; each of the arylene groups in structure (I) includes at least one R₁ attached to the arylene ring at the ortho and/or meta position relative to the phenolic hydroxyl group; m is 0 to 1; R₂ if present is a divalent organic group; n is 0 to 1 with the proviso that if n is 0, m is 0; and reacting any remaining epoxy groups, if any by adding a monofunctional compound that is reactive with the epoxy groups, and heating the reaction mixture until there is no detectable epoxy functionality, the polyhydroxy ether having an Mₙ of from 2000 to 10,000 as determined by gel permeation chromatography using polystyrene standards and containing at least 70 percent by weight of groups of the structure (II): 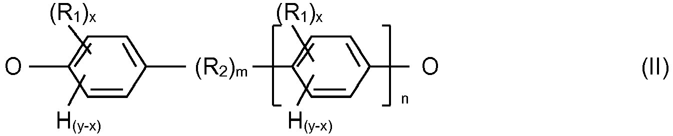 based on weight of the polyhydroxy ether.

The coatings deposited and cured from the above-mentioned compositions do not exhibit endocrine-disrupting activities.

The invention also provides for coating a substrate comprising:
(a) providing a substrate with a food or beverage-contacting surface,
(b) applying to at least a portion of the food or beverage-contacting surface the coating composition as described above, and
(c) forming the substrate into a package before or after application of the coating composition.

### DETAILED DESCRIPTION

Examples of polyhydric phenols are biphenolic compounds such as those of the structure (III):

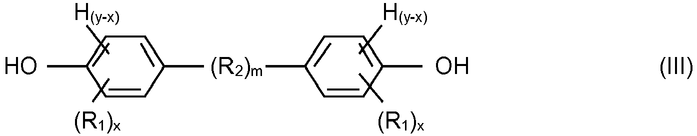

**Typically** m = 0 to1, when m is 1, R₂ is alkylene such as C₁ to C₄ alkylene, for example, methylene and isopropylene, R₁ is C₁ to C₄ alkyl such as methyl and tertiary-butyl, and y = 4 and x = 1 to 2.

Specific polyhydric phenols are as follows: 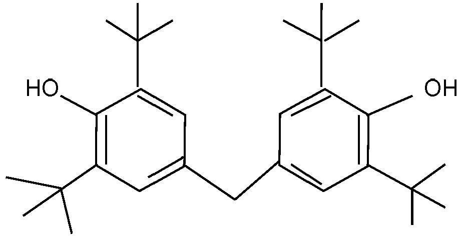 4,4'-methylenebis(2,6-di-t-butylphenol) 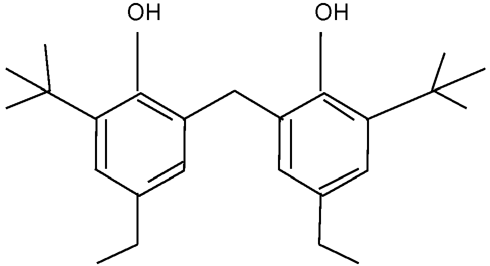 2,2'-methylenebis(4-ethyl-6-t-butylphenol) 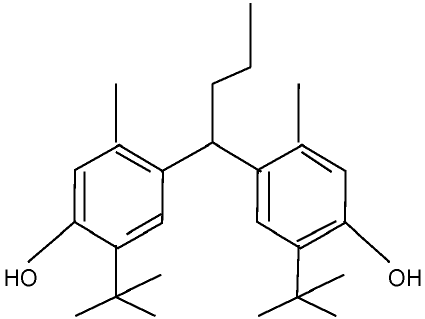 4,4'-butylidenebis(2-t-butyl-5-methylphenol) 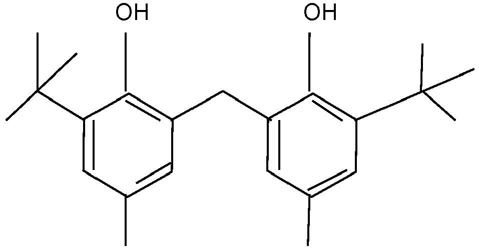 2,2'-methylenebis(6-t-butyl-4-methylphenol) 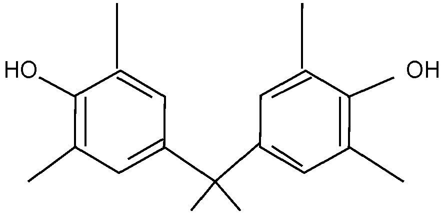 4,4'-isopropylidenebis(2,6-dimethylphenol) 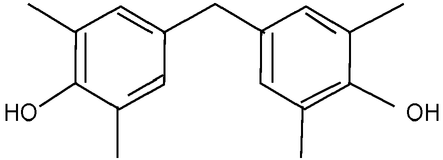 4,4'-methylenebis(2,6-dimethylphenol) 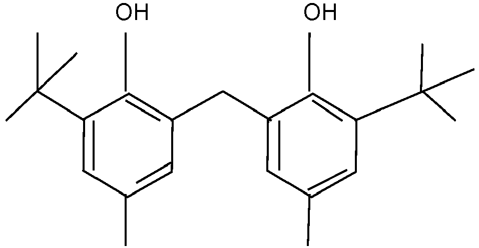 2,2'-methylenebis(4-methyl-6-t-butylphenol) 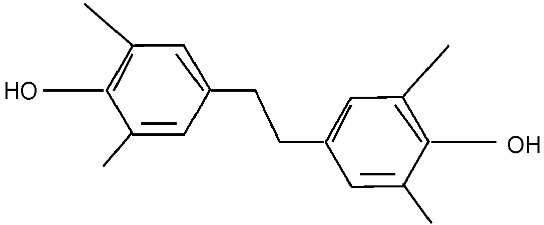 4,4'-(ethane-1,2-diyl)bis(2,6-dimethylphenol) 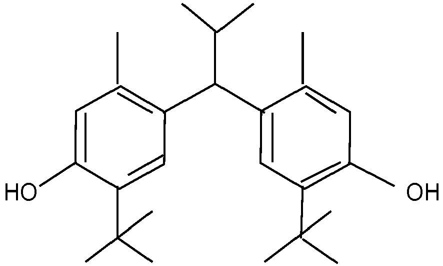 4,4'-isobutylidenebis(2-t-butyl-5-methylphenol) 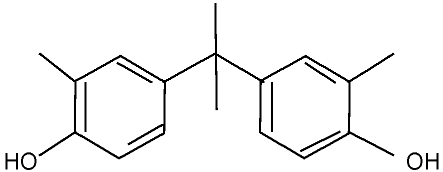 4,4'-isopropylidenebis(2-methylphenol) 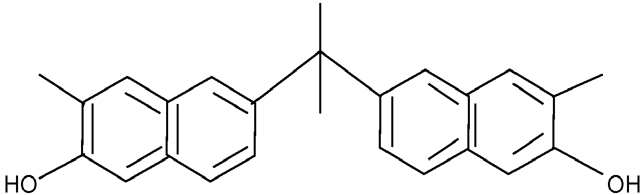 4,4'-isopropylidenebis(2-methylnaphthol) 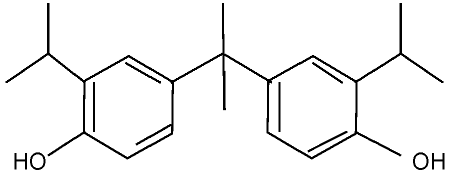 4,4'-isopropylidenebis(2-isopropylphenol) 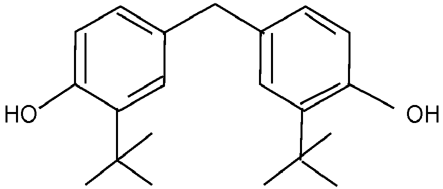 bis(4-hydroxy-3-t-butylphenyl) 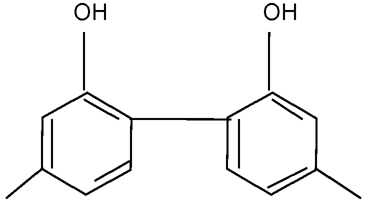 bis(2-hydroxy-4-methyl) biphenol

The polyhydroxy ethers used in the practice of the invention can be prepared as generally described in U.S. Patent No. 3,294,747. For example, the polyhydroxy ethers can be prepared by the reaction of epichlorohydrin with the above-described polyhydric phenols in an alkaline medium initially at a low temperature until at least 60 mole percent of the epichlorohydrin has been consumed and then at a higher temperature, typically reflux temperature. The polyhydroxy ethers can be prepared by admixing the polyhydric phenols with the epichlorohydrin in a mole ratio of from 0.98 to about 1.02 moles of epichlorohydrin per 1.00 mole of polyhydric phenol in the presence of an alkali metal hydroxide, such as sodium hydroxide or potassium hydroxide, added entirely initially or stepwise over the course of the reaction in an aqueous medium at a temperature of about 10-50°C. until at least 60 mole percent of the epichlorohydrin has been consumed. The amount of alkali metal hydroxide can be adjusted such that the final concentration of the alkali metal hydroxide in the aqueous phase of the reaction mixture at the completion of the low temperature reaction is from 0.1 to 1.2 molal. The reaction mixture can then be heated to above 60°C., usually at reflux temperature, until the resultant polyhydroxy ether has the desired molecular weight, that is, from 2000 to 10,000, such as 2000 to 8000, on a number average basis (Mₙ) as determined by gel permeation chromatography using polystyrene standards. Typically, the molecular weight advancement can be monitored by measuring the reduced viscosity of the reaction mixture and it is typically above 0.35 and usually above 0.5, such as 0.5 to 1.2 (measured as a 0.2 gram sample in 100 milliliters of tetrahydrofuran).

Besides water, the reaction mixture also may contain an inert organic diluent that is a solvent for the starting materials and is nonreactive with the final product. Suitable organic diluents are hydroxylated organic diluents such as aliphatic alcohols containing from 1 to 4 carbon atoms such as ethanol and n-butanol; ketones such as methyl ethyl ketone and methyl isobutyl ketone, and aliphatic and aromatic hydrocarbons such as n-hexane and xylene. Mixtures of organic diluents can also be used. Typically, the reaction mixture contains from 10 to 30 percent by weight water, 30 to 50 percent by weight organic diluent and 30 to 50 percent by weight of reactants (epichlorohydrin and polyhydric phenol). The percentages by weight are based on total weight of the reaction medium.

Once the polyhydroxy ether is produced, any remaining epoxy groups, if any, are reacted such as by adding a monofunctional compound such as a monophenol that is reactive with the epoxy groups, and heating the reaction mixture until there is no detectable epoxy functionality.

The polyhydroxy ether can be recovered from the reaction mixture by adding additional organic diluent and water to the reaction mixture to form a 2-phase system. The lower phase is an alkaline water phase and contains dissolved salts, unreacted starting materials and undesirable lower molecular weight reaction products. The lower alkaline phase is drawn off and discarded. The upper polymer bearing organic phase is mixed with additional water and the lower aqueous phase drawn off. These washing steps can be repeated as necessary to remove substantially all of the alkaline material, unreacted starting materials and lower molecular weight reaction products.

The polyhydroxy ether can be recovered by stripping off the organic solvent and recovering the polyhydroxy ether as a powdery solid. Alternatively, some organic solvent can remain to recover the polyhydroxy ether in solution.

Coating compositions used in the present invention include a film-forming amount of the polyhydroxy ether described herein and include additional ingredients such as a liquid carrier and a crosslinker. The coating compositions are formulated to be suitable for use as a food or beverage-contacting packaging coating.

The present invention further provides a package, wherein at least a portion of the package is coated with a coating composition described herein. The package may have a surface that is in contact with food or beverage.

The present invention provides a container including a food-contacting surface, wherein at least a portion of the food-contacting surface is coated with a coating composition described herein.

The present invention provides a method of applying the coating composition described herein to at least a portion of the food-contacting surface of a substrate prior to or after forming the substrate into a package. The substrate can be a metal substrate, typically steel, including tin-plated steel, and aluminum.

The present invention also provides a method of forming a food or beverage can or a portion thereof that includes: applying a coating composition described herein to a metal substrate (e.g., applying the composition to the metal substrate in the form of a planar coil or sheet), curing the composition, and forming the substrate into a food or beverage can or a portion thereof.

The present invention further provides a method of forming the substrate into an article such as a two-piece can body or can end, forming the substrate into a can end or a can body and spray coating the interior or food or beverage-contacting surface of the can body or can end.

The amount of polyhydroxy ether included in coating compositions of the present invention may vary depending on a variety of considerations such as, for example, the method of application, the presence of other film-forming materials, whether the coating composition is a water-based or organic solvent-based system. The polyhydroxy ether used in the practice of the present invention will typically constitute from 10 to 90, such as 30 to 70, such as 50 to 70 percent by weight of the coating composition, based on the total weight of resin solids in the coating composition.

Coating compositions used in the present invention are formulated using one or more curing agents, sometimes referred to as crosslinkers. The choice of a particular crosslinker typically depends on the particular product being formulated. For example, some coating compositions are highly colored (e.g., gold-colored coatings). These coatings may typically be formulated using crosslinkers that themselves tend to have a yellowish color. In contrast, white coatings are generally formulated using non-yellowing crosslinkers, or only a small amount of a yellowing crosslinker. Suitable examples of such curing agents are reactive with the hydroxyl groups of the polyhydroxy ether such as phenolplast and aminoplast.

Phenolplast resins include the condensation products of aldehydes with phenols. Formaldehyde and acetaldehyde are preferred aldehydes. Various phenols can be employed such as phenol, cresol, p-phenylphenol, p-tert-butylphenol, p-tert-amylphenol, and cyclopentyl phenol.

Aminoplast resins are the condensation products of aldehydes such as formaldehyde, acetaldehyde, crotonaldehyde, and benzaldehyde with amino- or amido-group-containing substances such as urea, melamine, and benzoguanamine. Examples of suitable aminoplast crosslinking resins include, without limitation, benzoguanamine-formaldehyde resins, melamine-formaldehyde resins, etherified melamine-formaldehyde, and urea-formaldehyde resins.

The level of curing agent (i.e., crosslinker) required will depend on the type of curing agent, the time and temperature of the bake, the molecular weight of the polyhydroxy ether, and the desired film properties. The cross linker is typically present in the coating composition in amounts of from 1 to 70, such as 2 to 50, such as 5 to 30 percent by weight based upon the total weight of the resin solids in the coating composition. The weight ratio of curing agent to polyhydroxy ether is typically from 0.2 to 6 to 1.

A coating composition used in the present invention in addition to the polyhydroxy ether polymer and cross linker may also include other optional polymers that do not adversely affect the coating composition or a cured coating composition resulting therefrom. Such optional polymers are typically included in a coating composition as fillers or as an adjuvant film former, and/or they can be included as a crosslinking material, or to provide desirable properties. One or more optional polymers can be included in a sufficient amount to serve an intended purpose, but not in such an amount to adversely affect a coating composition or a cured coating composition resulting therefrom.

Such additional polymeric materials can be nonreactive, and hence, simply function as fillers. Such optional nonreactive filler polymers include, for example, polyesters, acrylics, polyamides, and polyhydroxy ethers. Alternatively, such additional polymeric materials can be reactive with other components of the composition (for example, with the curing agent). If desired, reactive polymers can be incorporated into the compositions of the present invention to provide additional functionality for various purposes, including crosslinking. Examples of such reactive polymers include, for example, hydroxyl and/or carboxylic acid functionalized polyesters and (meth)acrylic polymers. If used the additional polymeric materials are typically present in amounts of 5 to 70, such as 10 to 50 percent by weight based upon the total weight of the resin solids in the coating composition.

Optionally, a catalyst to increase the rate of cure may be included in the coating composition. Examples of catalysts, include, but are not limited to, strong acids (e.g., dodecylbenzenesulphonic acid (DDBSA), available as CYCAT 600 from Cytec, methane sulfonic acid (MSA), p-toluene sulfonic acid (pTSA), dinonylnaphthalenedisulfonic acid (DNNDSA), and mixtures thereof. If used, a catalyst is typically present in the coating composition in amounts of 0.01 to 3.0. such as 0.1 to 1.0 percent by weight based on total weight of resin solids in the coating composition.

Another useful optional ingredient is a lubricant (e.g., a wax), which facilitates manufacture of fabricated metal articles (e.g. closures and food or beverage can ends) by imparting lubricity to sheets of coated metal substrate. Non-limiting examples of suitable lubricants include, for example, natural waxes such as Carnauba wax or lanolin wax, polytetrafluoroethane (PTFE) and polyethylene type lubricants. If used, a lubricant is typically present in the coating composition in an amount of 0.1 to 2.0 percent by weight based on the total weight of nonvolatile material in the coating composition.

Another useful optional ingredient is a colorant. The colorant can be added to the coating in any suitable form, such as discrete particles, dispersions, solutions and/or flakes. A single colorant or a mixture of two or more colorants can be used in the coatings of the present invention. Suitable colorants are listed in U.S. Patent No. 8,614,286, column 7, line 2 through column 8, line 65. Particularly suitable for packaging coatings are those approved for food contact, such as titanium dioxide; iron oxides, such as black iron oxide; carbon black; ultramarine blue; phthalocyanines, such as phthalocyanine blue and phthalocyanine green; chromium oxides, such as chromium green oxide; graphite fibrils; ferried yellow; quindo red; and combinations thereof, and those listed in Article 178.3297 of the Code of Federal Regulations.

Surfactants can be optionally added to the coating composition to aid in flow and wetting of the substrate. Examples of surfactants, include, but are not limited to, nonylphenol polyhydroxy ethers and salts and similar surfactants known to persons skilled in the art. If used, a surfactant is typically present in the coating composition an amount of 0.01 to 10, such as 0.1 to 5 percent by weight based on the total weight of non-volatile material in the coating composition.

The coating compositions used in the present invention can be present as a layer of a mono-layer coating system or one or more layers of a multi-layer coating system. The coating composition can be used as a primer coat, an intermediate coat, a top coat, or a combination thereof. The coating thickness of a particular layer and the overall coating system will vary depending upon the coating material used, the substrate, the coating application method, and the end use for the coated article. Mono-layer or multi-layer coil coating systems including one or more layers formed from a coating composition of the present invention may have any suitable overall coating thickness, but will typically have an overall average dry coating thickness of from about 2 to 60 µm such as from about 3 to 12 µm.

The coating composition may be applied to the substrate by spraying, dipping or by roll coating including reverse roll coating.

After applying the coating composition onto a substrate, the composition can be cured using a variety of processes, including, for example, oven baking by either conventional or convectional methods, or any other method that provides an elevated temperature suitable for curing the coating. The curing process may be performed in either discrete or combined steps. For example, substrates can be dried at ambient temperature to leave the coating compositions in a largely uncrosslinked state. The coated substrates can then be heated to fully cure the compositions. In certain instances, coating compositions of the present invention can be dried and cured in one step.

The cure conditions will vary depending upon the method of application and the intended end use. The curing process may be performed at any suitable temperature, including, for example, oven temperatures in the range of from about 100°C. to 300°C., and more typically from about 177°C. to 250°C. If metal coil is the substrate to be coated, curing of the applied coating composition may be conducted, for example, by heating the coated metal substrate over a suitable time period to a peak metal temperature ("PMT") of preferably greater than about 350°F. (177°C.). More preferably, the coated metal coil is heated for a suitable time period (e.g., 5 to 900 seconds) to a PMT of at least about 215°C.

The coating compositions may be suitable for spray coating, coil coating and sheet coating. A further discussion of such application methods is provided below. It is contemplated that coating compositions of the present invention may be suitably used in each of these application methods discussed further below, including the end uses associated therewith.

Spray coating includes the introduction of the coating composition into the inside of a preformed packaging container. Typical preformed packaging containers suitable for spray coating include food cans, beer and beverage containers, and the like. The spray preferably utilizes a spray nozzle capable of uniformly coating the inside of the preformed packaging container. The sprayed preformed container is then subjected to heat to remove any residual carriers (e.g., water and/or solvents) and harden the coating.

A coil coating is described as the coating of a continuous coil composed of a metal (e.g., steel or aluminum). Once coated, the coating coil is subjected to a short thermal, ultraviolet, and/or electromagnetic curing cycle, for hardening (e.g., drying and curing) of the coating. Coil coatings provide coated metal (e.g., steel and/or aluminum) substrates that can be fabricated into formed articles, such as two-piece drawn food cans, three-piece food cans, food can ends, drawn and ironed cans, beverage can ends, and the like.

A sheet coating is described as the coating of separate pieces of a variety of materials (e.g., steel or aluminum) that have been pre-cut into square or rectangular "sheets." Typical dimensions of these sheets are approximately one square meter. Once coated, each sheet is cured. Once hardened (e.g., dried and cured), the sheets of the coated substrate are collected and prepared for subsequent fabrication. Sheet coatings provide coated metal (e.g., steel or aluminum) substrate that can be successfully fabricated into formed articles, such as two-piece drawn food cans, three-piece food cans, food can ends, drawn and ironed cans, beverage can ends (including, e.g., riveted beverage can ends having a rivet for attaching a pulltab thereto), and the like.

The coating composition used in the present invention can be an organic solvent-based composition typically having from 20 to 50, such as 25-35 percent by weight non-volatile components (i.e., "solids") based on total weight of the coating composition.

Alternatively, the coating composition used in the present invention is an aqueous or water-based composition typically having from 15 to 50, such as 20 to 40 percent by weight non-volatile components based on total weight of the coating composition.

Aqueous or water-based compositions may be prepared by the method disclosed in U.S. Patent No. 4,638,038 wherein a portion of the hydroxyl groups of the polyhydroxy ethers are reacted with monoanhydrides to generate carboxylic acid groups that may be neutralized with base to form a water-dispersible resinous material.

Alternatively, the polyhydroxy ether used in the practice of the present invention can be grafted to a water-dispersible (meth)acrylic polymer such as by grafting with a (meth)acrylic acid functional monomer that contains double bonds, which is polymerizable by a free radical mechanism. Examples of such monomers are (meth)acrylic acid and ethylenically unsaturated monomers not containing acid groups such as (meth)acrylic acid esters, styrene and the like. The resulting graft copolymer can then be at least partially neutralized with a base such as a tertiary amine. The non-volatile content of such aqueous-based coating compositions is typically from 20 to 50% by weight based on total weight of the coating composition.

The acrylic portion of the polyhydroxy ether-(meth)acrylic graft copolymer comprises polymerized ethylenically unsaturated monomers which include carboxyl functional monomers such as (meth)acrylic acid and unsaturated dicarboxylic acids such as maleic or fumaric, to provide carboxyl functionality for dispersing the polyhydroxy ether-(meth)acrylic copolymer mixture into water. The balance of the monomers preferably are non-functional under the contemplated conditions of polymerization, although small amounts of other reactive monomers may be used such as hydroxy monomers illustrated by 2-hydroxy ethyl (meth)acrylate, amide monomers illustrated by (meth)acrylamide, or N-methylol monomers illustrated by N-methylol (meth)acrylamide. The remaining monomers are non-functional but copolymerizable ethylenic monomers illustrated by (meth)acrylate esters, such as ethyl (meth)acrylate, methyl (meth)acrylate or isobutyl (meth)acrylate, vinyl aromatic compounds, styrene, or vinyl toluene, vinyl acetate, vinyl chloride, vinylidene chloride and other ethylenically unsaturated monomers such as butadiene and (meth)acrylonitrile. The (meth)acrylic polymer component comprises by weight between about 5% and 40 percent by weight based on the weight of the (meth)acrylic grafted polyhydroxy ether.

The coating compositions used in the practice of this invention are substantially free, may be essentially free and/or may be completely free of bisphenol A and reaction products thereof, including bisphenol A and bisphenol A diglycidyl ether ("BADGE"). A reaction product and/or coating that is substantially bisphenol A free is sometimes referred to as "BPA non intent" because BPA, including derivatives or residues thereof, are not intentionally added but may be present in trace amounts such as because of impurities or unavoidable contamination from the environment. The term "substantially free" as used in this context means the reaction product and/or coating compositions contain less than 1000 parts per million (ppm), "essentially free" means less than 100 ppm and "completely free" means less than 20 parts per billion (ppb) of any of the above compounds or derivatives or residues thereof.

As used herein, the following terms have the following meanings.

The term "organic group" means a hydrocarbon group (with optional elements other than carbon and hydrogen, such as oxygen, nitrogen, sulfur, and silicon) that is classified as an aliphatic group, a cyclic group, or combination of aliphatic and cyclic groups (e.g., alkaryl and aralkyl groups).

The term "cyclic or cyclic group" means a closed ring hydrocarbon group that is classified as an alicyclic group or an aromatic group, both of which can include heteroatoms.

The term "alicyclic group" means a cyclic hydrocarbon group having properties resembling those of aliphatic groups.

The term "alkyl or alkyl group" and "alkylene or alkylene group" refers to a straight or branched chain saturated aliphatic group that may be substituted with hetero atoms such as nitrogen, oxygen and sulfur atoms. Alkyl groups are monovalent and alkylene groups are divalent.

The term "aryl or aryl group" and "arylene or arylene group" refers to a closed aromatic ring or ring system such as phenylene, naphthylene, biphenylene, which may include atoms in the ring is an element other than carbon and hydrogen (e.g., nitrogen, oxygen, sulfur, etc.). The aryl and arylene groups may be substituted with organic groups. Aryl groups are monovalent and arlyene groups are divalent.

The term "polyhydric phenol" (which includes dihydric phenols) as used herein refers broadly to any compound having one or more arylene or heteroarylene groups (more typically one or more phenylene groups) and at least two hydroxyl groups attached to a same or different arylene or heteroarylene ring. Thus, for example, hydroquinone, 2,2'-biphenol and 4,4'-methylenebis(2,6-di-t-butylphenol) are considered to be polyhydric phenols.

The term "food-contacting surface" refers to the surface of a package such as an inner surface of a food or beverage container that is in contact with, or intended for contact with, a food or beverage product. By way of example, an interior surface of a metal substrate of a food or beverage container, or a portion thereof, is a food-contacting surface even if the interior metal surface is coated with a coating composition.

The term "package" means anything used to contain another item, particularly for shipping from a point of manufacture to a consumer, and for subsequent storage by a consumer. A package will be therefore understood as something that is sealed so as to keep its contents free from deterioration until opened by a consumer. The manufacturer will often identify the length of time during which the food or beverage will be free from spoilage, which typically ranges from several months to years. Thus, the present "package" is distinguished from a storage container or bakeware in which a consumer might make and/or store food; such a container would only maintain the freshness or integrity of the food item for a relatively short period. A package according to the present invention can be made of metal or non-metal, for example, plastic or laminate, and be in any form. An example of a suitable package is a laminate tube. Another example of a suitable package is metal can. The term "metal can" includes any type of metal can, container or any type of receptacle or portion thereof that is sealed by the food/beverage manufacturer to minimize or eliminate spoilage of the contents until such package is opened by the consumer. One example of a metal can is a food can; the term "food can(s)" is used herein to refer to cans, containers or any type of receptacle or portion thereof used to hold any type of food and/or beverage. The term "metal can(s)" specifically includes food cans and also specifically includes "can ends" including "E-Z open ends", which are typically stamped from can end stock and used in conjunction with the packaging of food and beverages. The term "metal cans" also specifically includes metal caps and/or closures such as bottle caps, screw top caps and lids of any size, lug caps, and the like. The metal cans can be used to hold other items as well, including, but not limited to, personal care products, bug spray, spray paint, and any other compound suitable for packaging in an aerosol can. The cans can include "two piece cans" and "three-piece cans" as well as drawn and ironed one-piece cans; such one piece cans often find application with aerosol products. Packages coated according to the present invention can also include plastic bottles, plastic tubes, laminates and flexible packaging, such as those made from PE, PP, PET and the like. Such packaging could hold, for example, food, toothpaste, personal care products and the like.

The term "colorant" means any substance that imparts color and/or other opacity and/or other visual effect to the composition.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (e.g., polymers of two or more different monomers) and oligomers. Similarly, unless otherwise indicated, the use of a term designating a polymer class such as, for example, "polyhydroxy ether" is intended to include both homopolymers and copolymers (e.g., polyhydroxy ether-ester copolymers) and graft copolymers (e.g. polyhydroxy ether-(meth) acrylic graft copolymers).

Acrylic and methacrylic monomers and polymers are designated as (meth)acrylic monomers and polymers.

The term "comprises" and variations thereof do not have a limiting meaning where these terms appear in the description and claims.

## Claims

1. A package or a portion thereof having an interior food-contacting surface and a coating composition being substantially free of bisphenol A and reaction products thereof applied to the interior surface; wherein the coating composition comprises a polyhydroxy ether and a curing agent for the polyhydroxy ether and in which the polyhydroxy ether is prepared from reacting epichlorohydrin with a polyhydric phenol having the following structure (I): 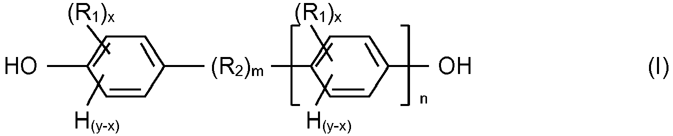 where R₁ is independently an organic group having a molecular weight of at least 15 Daltons or R₁ can optionally join together with another R₁ to form a fused aromatic ring that is similarly substituted with the R₁ organic group; y = 4, x = 1 to 2; each of the arylene groups in structure (I) includes at least one R₁ attached to the arylene ring at the ortho and/or meta position relative to the phenolic hydroxyl group; m is 0 to 1; R₂ if present is a divalent organic group; n is 0 to 1 with the proviso that if n is 0, m is 0; and reacting any remaining epoxy groups, if any by adding a monofunctional compound that is reactive with the epoxy groups, and heating the reaction mixture until there is no detectable epoxy functionality, the polyhydroxy ether having an Mₙ of from 2000 to 10,000 as determined by gel permeation chromatography using polystyrene standards and containing at least 70 percent by weight of groups of the structure (II): 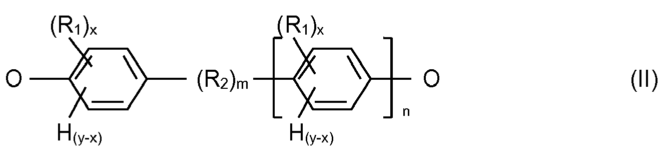 based on weight of the polyhydroxy ether.

2. The package of claim 1 that is a metal food or beverage container, in which the metal is preferably steel or aluminum.

3. The package of claim 1 in which the curing agent is a phenolplast.

4. The package of claim 1 in which
(a) n = 1, preferably m = 1; or
(b) R₁ is C₁ to C₄ alkyl, preferably R₁ is methyl; or
(c) R₂ is alkylene, preferably R₂ is C₁ to C₄ alkylene.

5. The package of claim 1 in which the polyhydric phenol has the following structure (III): 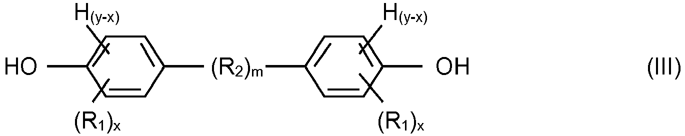
where each R₁ is independently an alkyl group; y = 4, x = 1 to 2, m = 0 to 1;
when m = 1, R₂ is a divalent organic group.

6. The package of claim 5 in which m = 1, R₂ is alkylene, and R₁ is C₁ to C₄ alkyl, preferably the polyhydric phenol has the following structure (IV):

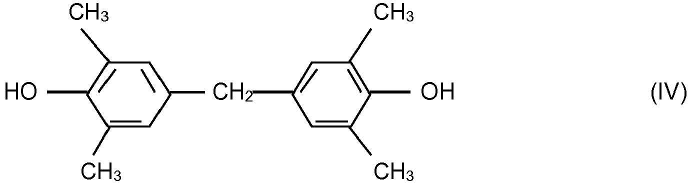

7. The package of claim 1 in which
(a) the weight ratio of phenolplast to polyhydroxy ether is from 0.2 to 6:1; or
(b) the coating composition is organic solvent based; or
(c) the coating composition is water based; or
(d) the coating composition is water based and the polyhydroxy ether polymer is grafted to a (meth)acrylic polymer.

8. The package of claim 2 in the form of a 2-piece or a 3-piece can.

9. A method comprising:
(a) providing a substrate having a food or beverage-contacting surface,
(b) applying to at least a portion of the food or beverage-contacting surface the coating composition as defined in any of claims 1 and 3-6, and
(c) forming the substrate into a package before or after application of the coating composition.

10. The method of claim 9 in which the substrate is metal.

11. The method of claim 10 in which the metal is steel or aluminum.

12. The method of claim 10 in which the metal substrate is a sheet.

13. The method of claim 12 in which the sheet is unwound from a metal coil.

14. The method of claim 13 in which the metal substrate is a can body.

15. The method of claim 10 in which the metal substrate is a can end.

## Patentansprüche

1. Eine Verpackung oder ein Teil davon mit einer inneren Oberfläche in Kontakt zu Lebensmitteln und einer Beschichtungszusammensetzung, die im Wesentlichen frei von Bisphenol-A und Reaktionsprodukten davon ist, die auf die innere Oberfläche aufgebracht ist, wobei die Beschichtungszusammensetzung einen Polyhydroxyether und eine Härtungsmittel für den Polyhydroxyether enthält und in der der Polyhydroxyether durch Umsetzen von Epichlorhydrin mit einem Polyhydroxyphenol der folgenden Struktur 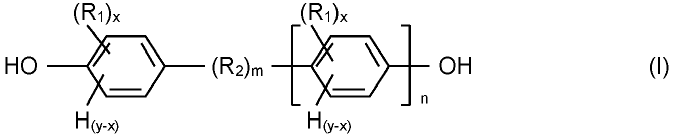 worin R₁ unabhängig voneinander eine organische Gruppe mit einem Molekulargewicht von wenigstens 15 Dalton ist oder R₁ optional zusammen mit einem anderen R₁ verbunden ist, um einen kondensierten aromatischen Ring zu bilden, der ähnlich mit der organischen R₁-Gruppe substituiert ist, y = 4 ist, x = 1 bis 2 ist, jede der Arylengruppen in Struktur (I) wenigstens ein R₁ aufweist, das an dem Arylenring in der ortho- und/oder meta-Position relativ zur phenolischen Hydroxylgruppe gebunden ist, m gleich 0 oder 1 ist, R₂, falls vorhanden, eine divalente organische Gruppe ist, n gleich 0 bis 1 ist, unter der Voraussetzung, dass, wenn n gleich 0 ist, m gleich 0 ist, und Umsetzen jeglicher verbleibender Epoxygruppen, falls vorhanden, durch Zugeben einer monofunktionellen Verbindung, die mit den Epoxygruppen reaktiv ist, und Erwärmen der Reaktionsmischung, bis keine erfassbare Epoxyfunktionalität vorhanden ist, hergestellt ist, wobei der Polyhydroxyether ein Mₙ von 2.000 bis 10.000, bestimmt durch Gelpermeationschromatographie unter Verwendung von Polystyrolstandards, aufweist und wenigstens 70 Gew.-% Gruppen der Struktur (II) aufweist: 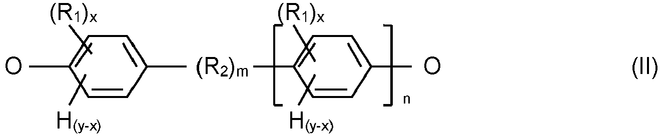 bezogen auf das Gewicht des Polyhydroxyethers.

2. Verpackung nach Anspruch 1, die ein metallischer Lebensmittel- oder Getränkebehälter ist, wobei das Metall vorzugsweise Stahl oder Aluminium ist.

3. Verpackung nach Anspruch 1, wobei das Härtungsmittel ein Phenoplast ist.

4. Verpackung nach Anspruch 1, in der
(a) n = 1, vorzugsweise m = 1 ist oder
(b) R₁ gleich C₁-C₄-Alkyl ist, vorzugsweise R₁ gleich Methyl ist oder
(c) R₂ gleich Alkylen ist, vorzugsweise R₂ gleich C₁-C₄-Alkylen ist.

5. Verpackung nach Anspruch 1, in der das Polyhydroxyphenol die folgende Struktur (III) aufweist: 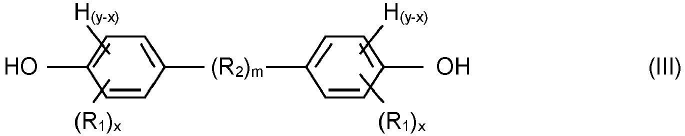 worin jedes R₁ unabhängig voneinander eine Alkylgruppe ist, y = 4 ist, x = 1 bis 2 ist, m = 0 bis 1 ist, wobei, wenn m = 1 ist, R₂ eine divalente organische Gruppe ist.

6. Verpackung nach Anspruch 5, in der m = 1 ist, R₂ gleich Alkylen ist und R₁ gleich C₁-C₄-Alkyl ist, vorzugsweise das Polyhydroxyphenol die folgende Struktur (IV) hat:

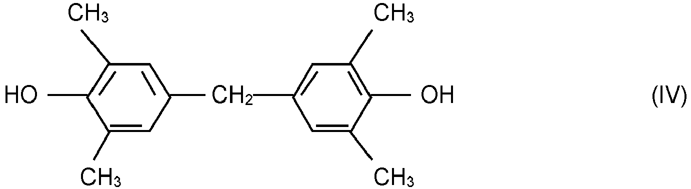

7. Verpackung nach Anspruch 1, in der
(a) das Gewichtsverhältnis von Phenoplast zu Polyhydroxyether von 0,2 bis 6:1 beträgt oder
(b) die Beschichtungszusammensetzung auf einem organischen Lösungsmittel basiert ist oder
(c) die Beschichtungszusammensetzung wasserbasiert ist oder
(d) die Beschichtungszusammensetzung wasserbasiert ist und das Polyhydroxyetherpolymer auf ein (Meth)acrylpolymer gepfropft ist.

8. Verpackung nach Anspruch 2 in Form einer zweiteiligen oder dreiteiligen Dose.

9. Verfahren umfassend:
(a) Bereitstellen eines Substrats mit einer Oberfläche, die in Kontakt zu Lebensmitteln oder Getränken steht,
(b) Aufbringen auf wenigstens einem Teil der Oberfläche, die in Kontakt mit Lebensmitteln oder Getränken steht, der Beschichtungszusammensetzung wie in einem der Ansprüche 1 und 3 bis 6 definiert und
(c) Formen des Substrats in eine Verpackung vor oder nach Aufbringen der Beschichtungszusammensetzung.

10. Verfahren nach Anspruch 9, wobei das Substrat Metall ist.

11. Verfahren nach Anspruch 10, bei dem das Metall Stahl oder Aluminium ist.

12. Verfahren nach Anspruch 10, wobei das Metallsubstrat ein Blech ist.

13. Verfahren nach Anspruch 12, in dem das Blech von einem Metallcoil abgewickelt ist.

14. Verfahren nach Anspruch 13, wobei das Metallsubstrat ein Dosenkörper ist.

15. Verfahren nach Anspruch 10, wobei das Metallsubstrat ein Dosendeckel ist.

## Revendications

1. Emballage ou partie d'un tel emballage, comportant une surface interne entrant en contact avec un aliment et une composition de revêtement qui est essentiellement exempte de bisphénol A et de ses produits de réaction, appliquée sur la surface interne ; dans lequel la composition de revêtement comprend un polyhydroxyéther et un agent de durcissement pour le polyhydroxyéther et dans lequel le polyhydroxyéther est préparé en faisant réagir de l'épichlorhydrine avec un phénol polyhydrique ayant la structure (I) suivante : 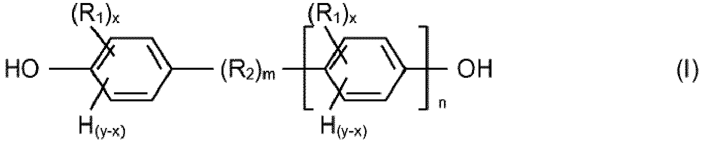 dans laquelle R₁ est indépendamment un groupe organique ayant une masse moléculaire d'au moins 15 daltons ou R₁ peut en option, conjointement avec un autre radical R₁, former un cycle aromatique condensé qui est de même substitué par le groupe organique R₁; y vaut 4, x vaut 1 à 2 ; chacun des groupes arylène dans la structure (I) inclut au moins un radical R₁ attaché au cycle arylène en la position ortho et/ou la position méta par rapport au groupe hydroxy phénolique ; m vaut 0 à 1 ; R₂ s'il est présent est un groupe organique divalent ; n vaut 0 à 1, étant entendu que si n est 0 m est 0 ;
et en faisant réagir tous les groupes époxy restants, s'ils existent, en ajoutant un composé monofonctionnel qui est réactif avec les groupes époxy, et en chauffant le mélange réactionnel jusqu'à ce qu'il n'y ait plus de fonctionnalité époxy détectable, le polyhydroxyéther ayant une Mₙ de 2 000 à 10 000 telle que déterminée par chromatographie par perméation de gel avec utilisation d'étalons polystyrène et contenant au moins 70 pour cent en poids de groupes de structure (II) : 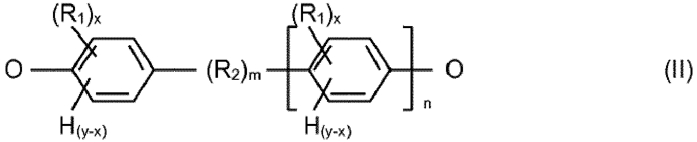 par rapport au poids du polyhydroxyéther.

2. Emballage selon la revendication 1, qui est un contenant métallique pour aliment ou boisson, dans lequel le métal est de préférence l'acier ou l'aluminium.

3. Emballage selon la revendication 1, dans lequel l'agent de durcissement est un phénoplaste.

4. Emballage selon la revendication 1, dans lequel
(a) n vaut 1, de préférence m vaut 1 ; ou
(b) R₁ est un groupe alkyle en C₁-C₄, de préférence R₁ est un groupe méthyle ; ou
(c) R₂ est un groupe alkylène, de préférence R₂ est un groupe alkylène en C₁-C₄.

5. Emballage selon la revendication 1, dans lequel le phénol polyhydrique a la structure (III) suivante : 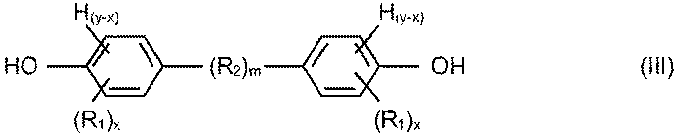 dans laquelle chaque R₁ est indépendamment un groupe alkyle ; y vaut 4, x vaut 1 à 2, m vaut 0 à 1 ; lorsque m vaut 1, R₂ est un groupe organique divalent.

6. Emballage selon la revendication 5, dans lequel m vaut 1, R₂ est un groupe alkylène, et R₁ est un groupe alkyle en C₁-C₄, de préférence le phénol polyhydrique a la structure (IV) suivante :

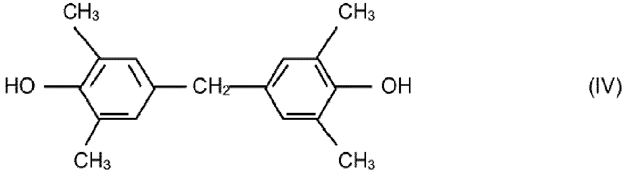

7. Emballage selon la revendication 1, dans lequel
(a) le rapport pondéral de phénoplaste à polyhydroxyéther vaut de 0:2 à 6:1 ; ou
(b) la composition de revêtement est à base de solvant organique ; ou
(c) la composition de revêtement est à base aqueuse ; ou
(d) la composition de revêtement est à base aqueuse et le polymère polyhydroxyéther est greffé sur un polymère (méth)acrylique.

8. Emballage selon la revendication 2, sous la forme d'une boîte de conserve en 2 pièces ou d'une boîte de conserve en 3 pièces.

9. Procédé comprenant les étapes consistant à :
(a) fournir un subjectile comportant une surface entrant en contact avec un aliment ou une boisson,
(b) appliquer sur au moins une partie de la surface entrant en contact avec un aliment ou une boisson la composition de revêtement telle que définie dans l'une quelconque des revendications 1 et 3 à 6, et
(c) façonner le subjectile en un emballage avant ou après l'application de la composition de revêtement.

10. Procédé selon la revendication 9, dans lequel le subjectile est du métal.

11. Procédé selon la revendication 10, dans lequel le métal est l'acier ou l'aluminium.

12. Procédé selon la revendication 10, dans lequel le subjectile métallique est une feuille.

13. Procédé selon la revendication 12, dans lequel la feuille est déroulée à partir d'un rouleau de métal.

14. Procédé selon la revendication 13, dans lequel le subjectile métallique est un corps de boîte de conserve.

15. Procédé selon la revendication 10, dans lequel le subjectile métallique est une extrémité de boîte de conserve.
